# EUROPEAN PATENT APPLICATION

(11) **EP 3 508 507 A1**
(43) Date of publication of application: **10.07.2019**
(21) Application number: 17846339.4
(22) Date of filing: 25.08.2017
(51) Int. Cl.: C08F 220/32, C08L 33/14, C08L 67/00

(54) **EPOXY-MODIFIED VINYL COPOLYMER, THERMOPLASTIC RESIN COMPOSITION CONTAINING SAME AND MOLDED ARTICLE OF SAID THERMOPLASTIC RESIN COMPOSITION**

(30) Priority: 01.09.2016 JP 2016171056
(71) Applicant: TECHNO-UMG CO., LTD., Tokyo 1050021 (JP)
(72) Inventor: FUKAMACHI, Yusuke, Ube-shi Yamaguchi 755-8580 (JP)
(74) Representative: Vossius & Partner Patentanwälte Rechtsanwälte mbB
(86) International application number: PCT/JP2017/030544
(87) International publication number: WO 2018/043334

(57) **Abstract**

An epoxy-modified vinyl copolymer (A) comprising 0.1 to 95 parts by mass of an epoxy group-containing vinyl monomer and 5 to 99.9 parts by mass of one or more vinyl monomers selected from aromatic vinyl monomers, vinyl cyanide monomers and additional vinyl monomers copolymerizable with these monomers, the copolymer having a weight average molecular weight Mw of 50,000 to 300,000 and an epoxy equivalent of 150 to 143,000 g/eq. A thermoplastic resin composition comprising the epoxy-modified vinyl copolymer (A) and a thermoplastic resin (C) such as a thermoplastic polyester resin (B). A shaped article comprising the thermoplastic resin.

## Description

### Technical Field

The present invention relates to an epoxy-modified vinyl copolymer which, when added to a thermoplastic resin such as a thermoplastic polyester resin, can effectively improve the shaping workability, heat resistance and hydrolysis resistance of the resin. The present invention also relates to a thermoplastic resin composition which includes the epoxy-modified vinyl copolymer and a thermoplastic resin such as a thermoplastic polyester resin, and to a shaped article obtained by shaping the thermoplastic resin composition.

### Background Art

Thermoplastic polyester resins are polymers that have excellent physical properties such as transparency, mechanical characteristics, gas barrier properties and heat resistance, chemical properties such as solvent resistance, acid resistance and alkali resistance, economic properties and reusability. Thermoplastic polyester resins are used in a wide range of fields including electric and electronic device parts, automobile parts, and packaging materials such as bottles. In recent years, the surface properties of the resins are taken advantage of in film and sheet production and extrusion applications such as profile extrusion.

The melt viscosity of thermoplastic polyester resins such as polyethylene terephthalate and polybutylene terephthalate generally has a large dependency on temperature. Thus, thermoplastic polyester resins disadvantageously exhibit a low melt viscosity and poor workability in the melt processing such as profile extrusion where the resins are shaped at temperatures above the melting point. Further, thermoplastic polyester resins have a drawback in that they are distorted at a low temperature unless reinforcements such as glass fibers are used.

The following proposals have been made to improve the defects of thermoplastic polyester resins.

To enhance the shaping workability of thermoplastic polyester resins, Patent Literature 1 presents an acrylic copolymer which is obtained by copolymerizing an epoxy group-containing alkyl (meth)acrylate, an additional alkyl methacrylate and an aromatic vinyl monomer and has a weight average molecular weight of 40,000 to 400,000. This copolymer exhibits good compatibility with thermoplastic polyester resins and is added thereto as a melt viscosity modifier (a thickener). However, Patent Literature 1 does not address the improvement in heat resistance, and it is feared that a deformation may occur in a hot environment.

Patent Literature 2 presents a maleimide copolymer which includes units from an aromatic vinyl monomer and/or a methacrylate ester monomer, units from a maleimide monomer and units from an epoxy group-containing monomer. This copolymer exhibits good compatibility with thermoplastic polyester resins and is added thereto to enhance the heat resistance of the resins. However, the maleimide copolymer needs to be added in a large amount to realize sufficient heat resistance, and consequently the fluidity tends to be significantly lowered.

Patent Literature 1 and Patent Literature 2 do not consider the epoxy equivalent of the copolymer added as an improver to thermoplastic polyester resins. Patent Literature 1 does not describe or suggest that a vinyl cyanide monomer is used as a comonomer. Patent Literature 2 mentions that a vinyl cyanide monomer such as acrylonitrile may be used as an optional comonomer, but no specific Examples which involved any vinyl cyanide monomer are described.
PTL 1: JP-2005-60593A
PTL 2: JP-H7-207084A

### Summary of Invention

An object of the present invention is to provide an epoxy-modified vinyl copolymer which can enhance the shaping workability of thermoplastic resins such as thermoplastic polyester resins and can also offer good heat resistance and hydrolysis resistance of the resultant thermoplastic resin compositions. Other objects of the present invention are to provide a thermoplastic resin composition which includes the epoxy-modified vinyl copolymer and a thermoplastic resin such as a thermoplastic polyester resin, and to provide a shaped article obtained by shaping the thermoplastic resin composition.

The present inventor has found that the above objects can be attained with an epoxy-modified vinyl copolymer which is obtained by copolymerizing an epoxy group-containing vinyl monomer with one or more vinyl monomers selected from aromatic vinyl monomers, vinyl cyanide monomers and additional vinyl monomers copolymerizable with these monomers in a specific ratio and which has a specific weight average molecular weight Mw and a specific epoxy equivalent.

A summary of the present invention is as described below.
[1] An epoxy-modified vinyl copolymer (A) comprising 0.1 to 95 parts by mass of an epoxy group-containing vinyl monomer and 5 to 99.9 parts by mass of one or more vinyl monomers selected from aromatic vinyl monomers, vinyl cyanide monomers and additional vinyl monomers copolymerizable with these monomers (with the proviso that the total of the epoxy group-containing vinyl monomer and the one or more vinyl monomers selected from aromatic vinyl monomers, vinyl cyanide monomers and additional vinyl monomers copolymerizable with these monomers is 100 parts by mass), the copolymer having a weight average molecular weight Mw of 50,000 to 300,000 and an epoxy equivalent of 150 to 143,000 g/eq.
[2] The epoxy-modified vinyl copolymer (A) according to [1], wherein the one or more vinyl monomers selected from aromatic vinyl monomers, vinyl cyanide monomers and additional vinyl monomers copolymerizable with these monomers include at least an aromatic vinyl monomer and a vinyl cyanide monomer.
[3] The epoxy-modified vinyl copolymer (A) according to [2], wherein the vinyl monomers include 4.1 to 99 parts by mass of the aromatic vinyl monomer and 0.9 to 95.8 parts by mass of the vinyl cyanide monomer.
[4] A thermoplastic resin composition comprising the epoxy-modified vinyl copolymer (A) described in any one of [1] to [3], and a thermoplastic resin (C).
[5] The thermoplastic resin composition according to [4], wherein the thermoplastic resin (C) comprises a thermoplastic polyester resin (B).
[6] The thermoplastic resin composition according to [4] or [5], which includes 0.1 to 15 parts by mass of the epoxy-modified vinyl copolymer (A) per 100 parts by mass of the thermoplastic resin (C).
[7] A shaped article comprising the thermoplastic resin composition described in any one of [4] to [6]. Advantageous Effects of Invention

The epoxy-modified vinyl copolymer according to the present invention can enhance the heat resistance and hydrolysis resistance of thermoplastic resins such as thermoplastic polyester resins without causing a significant loss of fluidity of the resins. Further, the copolymer can offer enhancements in mechanical strength such as tensile strength and impact resistance. Thus, the copolymer realizes stable fabrication such as extrusion and blow molding, is further expected to be effective in preventing burrs during injection molding, and can also enhance the quality of shaped articles.

### Brief Description of Drawing

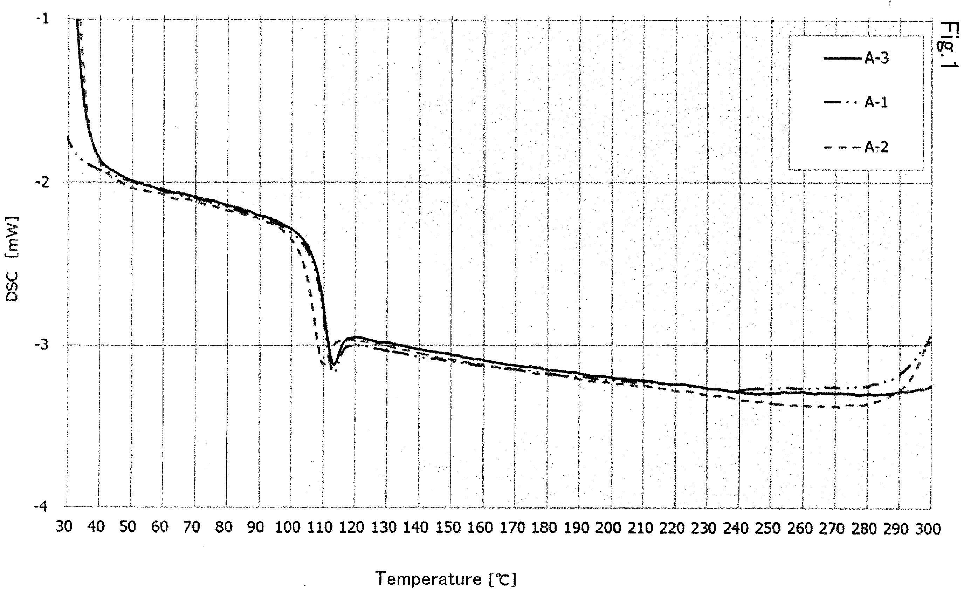

Fig. 1 illustrates DSC charts of epoxy-modified vinyl copolymers (A-1) and (A-2) and an unmodified vinyl copolymer (A-3) used in Examples and Comparative Examples.

### Description of Embodiments

Embodiments of the present invention will be described in detail hereinbelow.

### [Epoxy-modified vinyl copolymers (A)]

An epoxy-modified vinyl copolymer (A) of the present invention is a copolymer obtained by copolymerizing an epoxy group-containing vinyl monomer with one or more vinyl monomers selected from aromatic vinyl monomers, vinyl cyanide monomers and other vinyl monomers copolymerizable with these monomers (hereinafter, also written as "additional vinyl monomers"). The epoxy-modified vinyl copolymer (A) of the invention is preferably obtained by copolymerizing a monomer mixture including at least an epoxy group-containing vinyl monomer, an aromatic vinyl monomer and a vinyl cyanide monomer. Where the vinyl monomers such as aromatic vinyl monomers and vinyl cyanide monomers have an epoxy group, such monomers are categorized as the epoxy group-containing vinyl monomers.

### <Vinyl monomers>

Examples of the epoxy group-containing vinyl monomers which can constitute the epoxy-modified vinyl copolymer (A) include glycidyl acrylate, glycidyl methacrylate, glycidyl itaconate ester, allyl glycidyl ether, styrene-p-glycidyl ether, 3,4-epoxybutene, 3,4-epoxy-3-methyl-1-butene, 3,4-epoxy-1-pentene, 3,4-epoxy-3-methylpentene, 5,6-epoxy-1-hexene, vinylcyclohexene monoxide, p-glycidyl styrene, 2-methylallyl glycidyl ether, epoxystearyl acrylate, epoxystearyl methacrylate, 3,4-epoxycyclohexylmethyl methacrylate, 3,4-epoxycyclohexylmethyl acrylate, and glycidyl ether of 2,6-xylenol-N-methylolacrylamide. Of these, glycidyl methacrylate is preferable. The epoxy group-containing vinyl monomers may be used singly, or two or more may be used in combination.

Examples of the aromatic vinyl monomers include styrene, α-methylstyrene, o-methylstyrene, p-methylstyrene, ethylstyrene, vinyltoluene, vinylxylene, methyl-α-methylstyrene, t-butylstyrene, divinylbenzene, 1,1-diphenylstyrene, N,N-diethyl-p-aminomethylstyrene, N,N-diethyl-p-aminoethylstyrene, vinylnaphthalene, vinylpyridine, chlorinated styrenes such as monochlorostyrene and dichlorostyrene; brominated styrenes such as monobromostyrene and dibromostyrene; and monofluorostyrene. Of these, styrene and α-methylstyrene are preferable. The aromatic vinyl monomers may be used singly, or two or more may be used in combination.

Examples of the vinyl cyanide monomers include acrylonitrile, methacrylonitrile, ethacrylonitrile and fumaronitrile. Of these, acrylonitrile is preferable. The vinyl cyanide monomers may be used singly, or two or more may be used in combination.

Examples of the additional vinyl monomers include acrylate esters (such as methyl acrylate, ethyl acrylate, propyl acrylate and butyl acrylate), methacrylate esters (such as methyl methacrylate, ethyl methacrylate, propyl methacrylate and butyl methacrylate), and maleimide compounds (such as N-cyclohexylmaleimide and N-phenylmaleimide). The additional vinyl monomers may be used singly, or two or more may be used in combination.

### <Contents of vinyl monomers in epoxy-modified vinyl copolymer (A)>

In the epoxy-modified vinyl copolymer (A), the content of the epoxy group-containing vinyl monomer is 0.1 to 95 parts by mass, preferably 1 to 30 parts by mass, and particularly preferably 2 to 15 parts by mass. If the content of the epoxy group-containing vinyl monomer in the epoxy-modified vinyl copolymer (A) is less than 0.1 part by mass, effects are scarcely obtained in increasing the viscosity and enhancing the heat resistance and hydrolysis resistance of a thermoplastic resin composition that is obtained. If the content of the epoxy group-containing vinyl monomer in the epoxy-modified vinyl copolymer (A) exceeds 95 parts by mass, gelation may occur to deteriorate the fluidity of a thermoplastic resin composition that is obtained.

In the epoxy-modified vinyl copolymer (A), the vinyl monomer components except the epoxy group-containing vinyl monomers are one or more vinyl monomers selected from aromatic vinyl monomers, vinyl cyanide monomers and additional vinyl monomers. In the epoxy-modified vinyl copolymer (A), the total content of the vinyl monomer components except the epoxy group-containing vinyl monomers is 5 to 99.9 parts by mass, preferably 70 to 99 parts by mass, and particularly preferably 85 to 98 parts by mass. If the content of these vinyl monomers exceeds 99.9 parts by mass, little effects are obtained in increasing the viscosity and enhancing the heat resistance of a thermoplastic resin composition that is obtained. If the content of these vinyl monomers is less than 5 parts by mass, the fluidity of a thermoplastic resin composition that is obtained may be deteriorated.

In the present invention, the contents of the vinyl monomers in the epoxy-modified vinyl copolymer (A) are the amounts based on the total of the epoxy group-containing vinyl monomer and the one or more vinyl monomers selected from aromatic vinyl monomers, vinyl cyanide monomers and additional vinyl monomers taken as 100 parts by mass.

The contents of the vinyl monomers in the epoxy-modified vinyl copolymer (A) are the contents of structural units derived from the respective vinyl monomers forming the epoxy-modified vinyl copolymer (A), and usually correspond to the contents of the vinyl monomers in 100 parts by mass of the mixture of the monomers used as the raw materials in the production of the epoxy-modified vinyl copolymer (A), that is, the mixture of the epoxy group-containing vinyl monomer and one or more vinyl monomers selected from aromatic vinyl monomers, vinyl cyanide monomers and additional vinyl monomers.

In the epoxy-modified vinyl copolymer (A) of the invention, it is preferable that the one or more vinyl monomers selected from aromatic vinyl monomers, vinyl cyanide monomers and additional vinyl monomers include at least an aromatic vinyl monomer and a vinyl cyanide monomer. In particular, a vinyl cyanide monomer is advantageously included because a thermoplastic resin composition including such an epoxy-modified vinyl copolymer (A) attains an excellent balance between fluidity and heat resistance. In contrast, the copolymers of Patent Literatures 1 and 2 described above do not include vinyl cyanide monomers and are thus incapable of offering simultaneous enhancements in fluidity and heat resistance of thermoplastic resin compositions. That is, the fluidity and the heat resistance are a tradeoff and are enhanced only individually. The fluidity is lowered if heat resistance is enhanced, and the fluidity is enhanced at the cost of heat resistance.

In the epoxy-modified vinyl copolymer (A), the content of the aromatic vinyl monomer is preferably 4.1 to 99 parts by mass, more preferably 30 to 95 parts by mass, and particularly preferably 60 to 80 parts by mass. If the content of the aromatic vinyl monomer is less than 4.1 parts by mass, shaped articles that are obtained may be poor in rigidity and shaping properties. If the content of the aromatic vinyl monomer is above 99 parts by mass, shaped articles that are obtained may have low impact resistance.

In the epoxy-modified vinyl copolymer (A), the content of the vinyl cyanide monomer is preferably 0.9 to 95.8 parts by mass, more preferably 4.9 to 40 parts by mass, and particularly preferably 5 to 38 parts by mass. If the content of the vinyl cyanide monomer is less than 0.9 parts by mass, shaped articles that are obtained may be poor in toughness and chemical resistance. If the content of the vinyl cyanide monomer is above 95.8 parts by mass, shaped articles that are obtained may be disadvantageously colored. The addition of the vinyl cyanide monomer in the above amount ensures that both the fluidity and heat resistance of a thermoplastic resin composition can be enhanced at the same time.

The additional vinyl monomer may be added in accordance with a purpose such as to enhance color reproduction or heat resistance. The content of the additional vinyl monomer in the epoxy-modified vinyl copolymer (A) is preferably 0 to 30 parts by mass, and particularly preferably 0 to 20 parts by mass.

### <Weight average molecular weight Mw>

The weight average molecular weight Mw of the epoxy-modified vinyl copolymer (A) of the present invention is 50,000 to 300,000, and preferably 70,000 to 280,000. The weight average molecular weight Mw in this range ensures that the epoxy-modified vinyl copolymer (A) will effectively offer enhanced fluidity and higher heat resistance of a thermoplastic resin composition.

### <Molecular weight distribution Mw/Mn>

The molecular weight distribution Mw/Mn of the epoxy-modified vinyl copolymer (A) of the invention is preferably 1.8 to 2.8, and more preferably 1.9 to 2.4. When the molecular weight distribution Mw/Mn is in this range, the epoxy-modified vinyl copolymer (A) can offer enhanced fluidity and higher heat resistance of a thermoplastic resin composition more effectively.

The weight average molecular weight Mw and molecular weight distribution Mw/Mn of the epoxy-modified vinyl copolymer (A) are measured by the method described later in Examples.

### <Epoxy equivalent>

The epoxy equivalent of the epoxy-modified vinyl copolymer (A) of the invention is 150 to 143,000 g/eq. By virtue of the epoxy equivalent being in this range, the copolymer can effectively enhance the fluidity, heat resistance and hydrolysis resistance of a thermoplastic resin composition.

The epoxy equivalent of the epoxy-modified vinyl copolymer (A) is measured by the method described later in Examples.

To ensure the balance between impact resistance and shaping properties of a thermoplastic resin composition that is obtained, the reduced viscosity of the epoxy-modified vinyl copolymer (A) is preferably 0.2 to 1.2 dL/g, and particularly preferably 0.3 to 1.1 dL/g. When the reduced viscosity of the epoxy-modified vinyl copolymer (A) is not less than the above lower limit, impact strength is further increased. When the reduced viscosity of the epoxy-modified vinyl copolymer (A) is not more than the above upper limit, good shaping properties and favorable appearance of shaped articles can be maintained.

The reduced viscosity of the epoxy-modified vinyl copolymer (A) is measured by the method described later in Examples.

### <Endothermic and exothermic behaviors>

When analyzed by differential scanning calorimetry (DSC) at a heat-up rate of 10°C/min in a 50 mL air/min atmosphere, the epoxy-modified vinyl copolymer (A) of the present invention exhibits an endothermic behavior at a measurement temperature of 90°C to 120°C and an exothermic behavior at a measurement temperature of 260°C to 300°C. More preferably, the copolymer exhibits a sharp endothermic behavior at a measurement temperature of 100°C to 120°C and a sharp exothermic behavior at a measurement temperature of 280°C to 300°C.

When the epoxy-modified vinyl copolymer (A) exhibits endothermic and exothermic behaviors at the above temperatures, the copolymer can offer enhanced heat resistance and higher hydrolysis resistance of a thermoplastic resin composition more effectively.

The endothermic and exothermic behaviors of the epoxy-modified vinyl copolymer (A) are analyzed by the measurement method described later in Examples.

### <Methods for producing epoxy-modified vinyl copolymers (A)>

The epoxy-modified vinyl copolymer (A) may be produced by a polymerization method such as suspension polymerization, bulk polymerization, emulsion polymerization or solution polymerization. Of these methods, suspension polymerization is preferable.

### [Thermoplastic resins (C)]

A thermoplastic resin (C) contained in a thermoplastic resin composition of the present invention may be, for example, a thermoplastic polyester resin (B), ABS resin, ASA resin, AES resin, polycarbonate, polyvinyl chloride, polystyrene, polyacetal, modified polyphenylene ether (modified PPE), ethylene-vinyl acetate copolymer, polyarylate, liquid crystal polyester, polyethylene, polypropylene, fluororesin or polyamide. One, or two or more thermoplastic resins (C) may be contained in a thermoplastic resin composition of the invention.

Of the thermoplastic resins (C), thermoplastic polyester resins (B) described below are preferably contained as the thermoplastic resins (C) in thermoplastic resin compositions of the invention.

Mechanical strength such as impact resistance may be enhanced when a thermoplastic polyester resin (B) is used in combination with a thermoplastic resin (C) other than the thermoplastic polyester resins (B), for example, an ABS resin.

Where a thermoplastic resin composition of the invention includes a thermoplastic polyester resin (B) and a thermoplastic resin (C) other than the thermoplastic polyester resins (B), the content of the thermoplastic resin (C) other than the thermoplastic polyester resins (B) is preferably not more than 40 parts by mass per 100 parts by mass of the thermoplastic polyester resin (B) in order to reliably obtain the effects of the use of the thermoplastic polyester resin (B).

### [Thermoplastic polyester resins (B)]

The thermoplastic polyester resin (B) may be a polymer or copolymer obtained by the polycondensation reaction of materials based on a dicarboxylic acid (or an ester-forming derivative thereof) and a diol (or an ester-forming derivative thereof).

Examples of the dicarboxylic acids include aromatic dicarboxylic acids such as terephthalic acid, isophthalic acid, orthophthalic acid, 1,5-naphthalenedicarboxylic acid, 2,5-naphthalenedicarboxylic acid, 2,6-naphthalenedicarboxylic acid, 2,2'-biphenyldicarboxylic acid, 3,3'-biphenyldicarboxylic acid, 4,4'-biphenyldicarboxylic acid, 4,4'-diphenyl ether dicarboxylic acid, 4,4'-diphenylmethanedicarboxylic acid, 4,4'-diphenylsulfonedicarboxylic acid, 4,4'-diphenylisopropylidenedicarboxylic acid, 1,2-bis(phenoxy)ethane-4,4'-dicarboxylic acid, 2,5-anthracenedicarboxylic acid, 2,6-anthracenedicarboxylic acid, 4,4'-p-terphenylenedicarboxylic acid, and 2,5-pyridinedicarboxylic acid. Of these, terephthalic acid is preferable.

Two or more dicarboxylic acid components may be used as a mixture. The above dicarboxylic acid component may be used as a mixture with a small amount of one or more components selected from aliphatic dicarboxylic acid components such as adipic acid, azelaic acid, dodecanedioic acid and sebacic acid, and alicyclic dicarboxylic acid components such as cyclohexane dicarboxylic acid.

Examples of the diol components include aliphatic diols such as ethylene glycol, propylene glycol, butylene glycol, hexylene glycol, neopentyl glycol, 2-methyl-1,3-propanediol, diethylene glycol and triethylene glycol, alicyclic diols such as 1,4-cyclohexanedimethanol, and mixtures thereof. Of these, ethylene glycol, propylene glycol and butylene glycol are preferable. The above diol component may be used as a mixture with a small amount of one or more long-chain diols with a molecular weight of 400 to 6,000, for example, polyethylene glycol, poly-1,3-propylene glycol and polytetramethylene glycol.

Preferred examples of the polymers or copolymers of the above components include aromatic polyester resins such as polyethylene terephthalate (PET), polypropylene terephthalate (PPT), polybutylene terephthalate (PBT), polyethylene naphthalate (PEN), polybutylene naphthalate (PBN) and polyethylene-1,2-bis(phenoxy)ethane-4,4'-dicarboxylate, and copolymerized aromatic polyester resins such as polybutylene terephthalate/isophthalate and polybutylene terephthalate/decane dicarboxylate.

### [Thermoplastic resin compositions]

A thermoplastic resin composition of the present invention includes the epoxy-modified vinyl copolymer (A) of the invention, and the thermoplastic resin (C) such as the above thermoplastic polyester resin (B).

The thermoplastic resin composition of the invention may include a single epoxy-modified vinyl copolymer (A) of the invention, or may include two or more epoxy-modified vinyl copolymers (A) having different comonomers or comonomer ratios or different properties such as weight average molecular weight Mw and epoxy equivalent.

The thermoplastic resin composition of the invention may include one, or two or more thermoplastic resins (C) such as the above thermoplastic polyester resins (B).

### <Contents of components>

In the thermoplastic resin composition of the invention, the content of the epoxy-modified vinyl copolymer (A) is preferably 0.1 to 15 parts by mass, more preferably 1 to 10 parts by mass, and particularly preferably 1 to 7 parts by mass per 100 parts by mass of the thermoplastic resin (C). If the content of the epoxy-modified vinyl copolymer (A) is less than 0.1 part by mass per 100 parts by mass of the thermoplastic resin (C), the epoxy-modified vinyl copolymer (A) may fail to attain sufficient effects in increasing or enhancing the viscosity, heat resistance and hydrolysis resistance of the thermoplastic resin (C) such as the thermoplastic polyester resin (B). If the content of the epoxy-modified vinyl copolymer (A) is more than 15 parts by mass per 100 parts by mass of the thermoplastic resin (C), the thermoplastic resin composition may be gelled and be deteriorated in fluidity, and also may show low heat resistance depending on the type of the thermoplastic resin (C) .

### <Other components>

The thermoplastic resin composition of the present invention may include resins other than the epoxy-modified vinyl copolymers (A) and the thermoplastic resins (C), and elastomers while still achieving the advantageous effects of the invention.

Where necessary, various additives may be added to the thermoplastic resin composition of the invention. Examples of the additives include various stabilizers including antioxidants such as hindered phenolic antioxidants, antioxidants based on sulfur-containing organic compounds and antioxidants based on phosphorus-containing organic compounds, heat stabilizers such as phenolic stabilizers and acrylate-based stabilizers, transesterification inhibitors such as mixture of monostearyl acid phosphate and distearyl acid phosphate, UV absorbers such as benzotriazole-based UV absorbers, benzophenone-based UV absorbers and salicylate-based UV absorbers, and light stabilizers such as organic nickel-based stabilizers and hindered amine-based stabilizers, lubricants such as higher fatty acid metal salts and higher fatty acid amides, plasticizers such as phthalate esters and phosphate esters, flame retardants and flame retardant auxiliaries including halogen-containing compounds such as polybromodiphenyl ether, tetrabromobisphenol-A, brominated epoxy oligomers and brominated polycarbonate oligomers, phosphorus-containing compounds and antimony trioxide, carbon blacks, titanium oxides, pigments and dyes. Further, use may be made of reinforcements and fillers such as talc, calcium carbonate, aluminum hydroxide, glass fibers, glass flakes, glass beads, carbon fibers and metal fibers.

### <Methods for producing thermoplastic resin compositions>

The thermoplastic resin composition of the present invention may be obtained by mixing the epoxy-modified vinyl copolymer (A), the thermoplastic resin (C) and optionally other components. The mixing of these components may be performed with a known kneading device such as, for example, an extruder, rolls, a Banbury mixer or a kneader.

The epoxy-modified vinyl copolymer (A), the thermoplastic resin (C) and optional other components may be mixed in any order and in any manner without limitation. The mixture is preferably melt kneaded with a known extruder at 180 to 300°C.

### [Shaped articles]

A shaped article of the present invention is formed using the thermoplastic resin composition of the invention. The shaping methods are not particularly limited. Examples of the shaping methods include injection molding, extrusion, compression molding, insert molding, vacuum forming and blow molding.

The thermoplastic resin composition of the invention has excellent shaping properties, and the shaped articles of the invention obtained from the composition exhibit outstanding hydrolysis resistance, heat resistance and appearance.

The shaped articles of the invention may be suitably used in a variety of applications including electric and electronic device parts, automobile parts, packaging materials such as bottles, construction materials, everyday items, home appliance parts and office equipment parts.

### Examples

Hereinbelow, the present invention will be described in greater detail based on Examples and Comparative Examples. However, it should be construed that the scope of the invention is not limited to such Examples.

In the following, "%" and "parts" are on the mass basis unless otherwise mentioned.

Glycidyl methacrylate will be abbreviated as "GMA", acrylonitrile as "AN", and styrene as "ST".

### [Evaluation and measurement methods]

The measurement and evaluation methods used in Examples and Comparative Examples are described below.

### <Measurement of epoxy equivalent>

An epoxy-modified vinyl copolymer (A) was analyzed in accordance with JIS K 7236: 2009 to determine the epoxy equivalent (g/eq.). The epoxy number (eq./kg) was calculated from the epoxy equivalent.

### <Weight average molecular weight Mw and molecular weight distribution Mw/Mn>

The weight average molecular weight Mw and the molecular weight distribution Mw/Mn were measured by GPC (GPC: "GPC/V2000" manufactured by Waters, columns: "Shodex AT-G + AT-806MS" manufactured by Showa Denko K.K.) relative to polystyrenes.

### <Reduced viscosity>

A 0.2 dL/g solution of a vinyl copolymer in N,N-dimethylformamide was analyzed with an Ubbelohde viscometer to determine the reduced viscosity ηsp/C (unit: dL/g) at 25°C.

### <Differential scanning calorimetry (DSC)>

With a differential scanning calorimeter DSC ("DSC 8230" manufactured by Rigaku Corporation), a sample was analyzed at temperatures of 30°C to 300°C with a heat-up rate of 10°C/min in a 50 ml/min air atmosphere. The DSC chart obtained by the measurement was analyzed to determine the presence or absence of an endothermic behavior at measurement temperatures of 100°C to 120°C, and the presence or absence of an exothermic behavior at measurement temperatures of 280°C to 300°C.

### <Measurement of melt volume rate (MVR)>

Pellets of a thermoplastic resin composition were tested with a melt indexer (F-F01 manufactured by Toyo Seiki Seisaku-sho, Ltd.) at a cylinder temperature of 240°C and a load of 2.18 kg.

From the point of view of shaping properties, in particular, mold transfer properties in the molding of thin articles, the melt volume rate (MVR) is preferably in the range of 20 to 80 cm³/10 min.

### <Measurement of heat distortion temperature (HDT)>

The measurement was performed in accordance with ISO75-2. The load was 0.45 MPa.

The higher the heat distortion temperature (HDT), the higher the heat resistance.

### <Measurement of tensile strength>

The tensile strength (MPa) was measured in accordance with ISO527 at 23°C and a stress rate of 50 mm/min. The higher the value, the higher the tensile strength.

### <Evaluation of hydrolysis resistance>

A tensile test piece was set in a programmable constant temperature and humidity chamber at a temperature of 90°C and a humidity of 90%. The tensile strength (MPa) was measured after 250 hours and 500 hours.

The tensile strength of the tensile test piece after 500-hour exposure in the programmable constant temperature and humidity chamber was compared to the tensile strength of a tensile test piece without exposure in the programmable constant temperature and humidity chamber, thereby calculating the retention of tensile strength. The higher the retention (%), the higher the hydrolysis resistance.

### <Impact test>

A 4 mm thick test piece was tested in accordance with ISO test method 179 at a measurement temperature of 23°C to determine the V-notched Charpy impact strength (kJ/m²).

### [Production of epoxy-modified vinyl copolymers]

Epoxy-modified vinyl copolymers and unmodified vinyl copolymer used in Examples and Comparative Examples were produced as described below.

### <Production of epoxy-modified vinyl copolymer (A-1)>

A reaction vessel was loaded with 150 parts of distilled water, 0.045 parts of a polymer dispersant and 0.5 parts of sodium sulfate. Stirring was performed. A mixture which included 3.0 parts of glycidyl methacrylate, 24.2 parts of acrylonitrile, 72.8 parts of styrene, 0.25 parts of t-dodecylmercaptane and 0.18 parts of 2,2'-azobis(2-methylbutyronitrile) was added thereto to form a suspension, which was then heated. When the inner temperature reached 77°C, polymerization was initiated. After the polymerization exothermic peak was observed with a thermometer, the system was held at an inner temperature of 95°C for 120 minutes and was thereafter cooled. The resultant slurry product was filtered, and the residue was water washed and dried to give an epoxy-modified vinyl copolymer (A-1) in the form of beads.

### <Production of epoxy-modified vinyl copolymer (A-2)>

An epoxy-modified vinyl copolymer (A-2) in the form of beads was obtained in the same manner as in the production of the epoxy-modified vinyl copolymer (A-1), except that the GMA/AN/ST ratio was changed to 8.5/22.9/68.6.

### <Production of unmodified vinyl copolymer (A-3)>

An unmodified vinyl copolymer (A-3) in the form of beads was obtained in the same manner as in the production of the epoxy-modified vinyl copolymer (A-1), except that the GMA/AN/ST ratio was changed to 0/29/71.

### <Production of epoxy-modified vinyl copolymer (A-4)>

An epoxy-modified vinyl copolymer (A-4) in the form of beads was obtained in the same manner as in the production of the epoxy-modified vinyl copolymer (A-1), except that the amount of t-dodecylmercaptane was changed to 0.8 parts.

### <Production of epoxy-modified vinyl copolymer (A-5)>

An epoxy-modified vinyl copolymer (A-5) in the form of beads was obtained in the same manner as in the production of the epoxy-modified vinyl copolymer (A-4), except that the GMA/AN/ST ratio was changed to 8.5/22.9/68.6.

### <Production of epoxy-modified vinyl copolymer (A-6)>

An epoxy-modified vinyl copolymer (A-6) in the form of beads was obtained in the same manner as in the production of the epoxy-modified vinyl copolymer (A-2), except that the amount of t-dodecylmercaptane was changed to 0.1 part.

Table 1 describes the raw materials and properties of the epoxy-modified vinyl copolymers (A-1), (A-2), (A-4), (A-5) and (A-6) and the unmodified vinyl copolymer (A-3).

The DSC charts of the epoxy-modified vinyl copolymers (A-1) and (A-2) and the unmodified vinyl copolymer (A-3) are shown in Fig. 1.

**[Table 1]**

| | | | Epoxy-modified vinyl copolymers | | | | | Unmodified vinyl copolymer |
|---|---|---|---|---|---|---|---|---|
| | | | A-1 | A-2 | A-4 | A-5 | A-6 | A-3 |
| Monomer composition | AN | [Parts by mass] | 24.2 | 22.9 | 24.2 | 22.9 | 22.9 | 29 |
| | ST | [Parts by mass] | 72.8 | 68.6 | 72.8 | 68.6 | 68.6 | 71 |
| | GMA | [Parts by mass] | 3.0 | 85 | 3.0 | 8.5 | 8.5 | 0 |
| T-dodecylmercaptan | | [Parts by mass] | 0.25 | 0.25 | 0.8 | 0.8 | 0.1 | 0.25 |
| Weight average molecular weight Mw | | - | 164000 | 165000 | 62000 | 64000 | 271000 | 169000 |
| Molecular weight distribution Mw/Mn | | - | 2.2 | 2.2 | 2.0 | 2.2 | 2.3 | 2.0 |
| Reduced viscosity | | [dL/g] | 0.83 | 0.71 | 0.36 | 0.35 | 1.03 | 0.88 |
| Epoxy equivalent | | [g/eq.] | 4752 | 1783 | 5015 | 1823 | 1821 | - |
| Epoxy number | | [eq./kg] | 0.21 | 0.56 | 0.20 | 0.55 | 0.55 | - |
| Endothermic behavior (100°C∼120°C) | | - | Present | Present | Present | Present | Present | Present |
| Exothermic behavior (280°C∼300°C) | | - | Present | Present | Present | Present | Present | Absent |

The following were used as thermoplastic resins (C).

### <Thermoplastic polyester resin (B)>

Polybutylene terephthalate "DURANEX 2000" manufactured by Polyplastics Co., Ltd.

### <ABS graft resin (D)>

"B602N" (ABS graft resin with 65% rubber content) manufactured by UMG ABS, LTD.

### [Examples 1 to 16 and Comparative Examples 1 to 4]

### <Melt kneading>

The epoxy-modified vinyl copolymer (A-1), the epoxy-modified vinyl copolymer (A-2), the epoxy-modified vinyl copolymer (A-4), the epoxy-modified vinyl copolymer (A-5), the epoxy-modified vinyl copolymer (A-6) and the unmodified vinyl copolymer (A-3) were each admixed, in the amounts shown in Tables 2 to 4, with 100 parts of the thermoplastic polyester resin (B). (In Comparative Example 1, only the thermoplastic polyester resin (B) was used.) The mixtures were each melt kneaded with a twin-screw extruder (apparatus: TEX28V manufactured by The Japan Steel Works, LTD., cylinder temperature: 250°C, screw rotational speed: 300 rpm) to give pellets.

### <Injection molding>

The pellets of the thermoplastic resin compositions were molded with an injection molding machine ("IS55FP-1.5A" manufactured by TOSHIBA MACHINE CO., LTD.) at a cylinder temperature of 220 to 250°C and a mold temperature of 60°C to give test pieces for the measurement of heat distortion temperature and test pieces (Type A1) for the measurement of tensile strength.

The pellets of the thermoplastic resin compositions were tested to measure the melt volume rate (MVR).

The HDT test pieces obtained above were tested to determine the heat distortion temperature (HDT).

The tensile test pieces obtained above were tested to determine the tensile strength and evaluate the hydrolysis resistance.

The results are described in Tables 2 to 4.

**[Table 2]**

| | | | Examples | | | | | | |
|---|---|---|---|---|---|---|---|---|---|
| | | | 1 | 2 | 3 | 4 | 5 | 6 | 7 |
| Amounts in composition [parts by mass] | Epoxy-modified vinyl copolymer | A-1 | 1.0 | 2.5 | 5.0 | | | | |
| | | A-2 | | | | 0.4 | 1.0 | 2.5 | 5.0 |
| | Thermoplastic polyester resin | B | 100 | 100 | 100 | 100 | 100 | 100 | 100 |
| Properties 1 | MVR | [cm³/10min.] | 46 | 43 | 37 | 46 | 45 | 40 | 31 |
| | HDT | [°C] | 138 | 145 | 144 | 139 | 144 | 151 | 144 |
| Properties 2 | Tensile strength (0 hours) | [MPa] | 56.2 | 57.4 | 59.3 | 56.8 | 57.1 | 58.7 | 59.6 |
| | After 250 hours * | [MPa] | 53.8 | 54.1 | 56.1 | 52.6 | 54.1 | 56.0 | 59.2 |
| | After 500 hours * | [MPa] | 33.2 | 32.5 | 33.3 | 29.3 | 31.7 | 35.9 | 43.0 |
| | Retention of tensile strength (after 500 hours) | [%] | 59 | 57 | 56 | 52 | 55 | 61 | 72 |

| | | | | | | | | | |
|---|---|---|---|---|---|---|---|---|---|
| 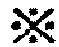 The residence time in the programmable constant temperature and humidity chamber (temperature: 90° C, humidity: 90%) for the evaluation of hydrolysis resistance. | | | | | | | | | |

**[Table 3]**

| | | | Comparative Examples | | | |
|---|---|---|---|---|---|---|
| | | | 1 | 2 | 3 | 4 |
| Amounts in composition [parts by mass] | Unmodified vinyl copolymer | A-3 | | 1.0 | 2.5 | 5.0 |
| | Thermoplastic polyester resin | B | 100 | 100 | 100 | 100 |
| Properties 1 | MVR | [cm³/10min.] | 47 | 46 | 45 | 42 |
| | HDT | [°C] | 132 | 135 | 133 | 127 |
| Properties 2 | Tensile strength (0 hours) | [MPa] | 55.0 | 55.2 | 55.9 | 56.1 |
| | After 250 hours * | [MPa] | 51.0 | 51.5 | 52.5 | 53.7 |
| | After 500 hours * | [MPa] | 26.1 | 32.5 | 28.9 | 30.3 |
| | Retention of tensile strength (after 500 hours) | [%] | 48 | 59 | 52 | 54 |

| | | | | | | |
|---|---|---|---|---|---|---|
| 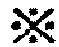 The residence time in the programmable constant temperature and humidity chamber (temperature: 90° C, humidity: 90%) for the evaluation of hydrolysis resistance. | | | | | | |

**[Table 4]**

| | | | Examples | | | | | | | | |
|---|---|---|---|---|---|---|---|---|---|---|---|
| | | | 8 | 9 | 10 | 11 | 12 | 13 | 14 | 15 | 16 |
| Amounts in composition [parts by mass] | Epoxy-modified vinyl copolymer | A-4 | 1.0 | 2.5 | 5.0 | | | | | | |
| | | A-5 | | | | 1.0 | 2.5 | 5.0 | | | |
| | | A-6 | | | | | | | 1.0 | 2.5 | 5.0 |
| | Thermoplastic polyester resin | B | 100 | 100 | 100 | 100 | 100 | 100 | 100 | 100 | 100 |
| Properties 1 | MVR | [cm³/10min.] | 49 | 44 | 37 | 48 | 38 | 26 | 46 | 42 | 35 |
| | HDT | [°C] | 134 | 141 | 142 | 147 | 151 | 146 | 155 | 155 | 153 |
| Properties 2 | Tensile strength (0 hours) | [MPa] | 55.0 | 55.7 | 55.4 | 56.7 | 56.3 | 58.6 | 56.4 | 57.3 | 58.0 |
| | After 250 hours * | [MPa] | 53.6 | 54.4 | 54.4 | 54.8 | 55.8 | 57.1 | 55.4 | 56.5 | 57.7 |
| | After 500 hours * | [MPa] | 33.5 | 33.2 | 37.2 | 32.5 | 34.6 | 38.0 | 33.8 | 32.6 | 38.3 |
| | Retention of tensile strength (after 500 hours) | [%] | 61 | 60 | 65 | 57 | 61 | 65 | 60 | 57 | 66 |

| | | | | | | | | | | | |
|---|---|---|---|---|---|---|---|---|---|---|---|
| 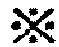 The residence time in the programmable constant temperature and humidity chamber (temperature: 90° C, humidity: 90%) for the evaluation of hydrolysis resistance. | | | | | | | | | | | |

### [Examples 17 to 22 and Comparative Examples 5 and 6]

### <Melt kneading>

The epoxy-modified vinyl copolymer (A-1) and the epoxy-modified vinyl copolymer (A-2) were each admixed, in the amounts shown in Table 5, with 90 parts of the thermoplastic polyester resin (B) and 10 parts of the ABS graft resin (D). (In Comparative Example 5, only the thermoplastic polyester resin (B) was used. In Comparative Example 6, only the thermoplastic polyester resin (B) and the ABS graft resin (D) were used.) The mixtures were each melt kneaded with a twin-screw extruder (apparatus: TEX28V manufactured by The Japan Steel Works, LTD., cylinder temperature: 250°C, screw rotational speed: 300 rpm) to give pellets.

### <Injection molding>

The pellets of the thermoplastic resin compositions were molded with an injection molding machine ("IS55FP-1.5A" manufactured by TOSHIBA MACHINE CO., LTD.) at a cylinder temperature of 220 to 250°C and a mold temperature of 60°C to give test pieces for the measurement of heat distortion temperature and test pieces for the measurement of Charpy impact strength.

The pellets of the thermoplastic resin compositions were tested to measure the melt volume rate (MVR).

The HDT test pieces obtained above were tested to determine the heat distortion temperature (HDT).

The Charpy impact test pieces obtained above were tested to determine the V-notched Charpy impact strength.

The results are described in Table 5.

**[Table 5]**

| | | | Examples | | | | | | Comparative Examples | |
|---|---|---|---|---|---|---|---|---|---|---|
| | | | 17 | 18 | 19 | 20 | 21 | 22 | 5 | 6 |
| Amounts in composition [parts by mass] | Epoxy-modified vinyl copolymer | A-1 | 1.0 | 2.5 | 5.0 | | | | | |
| | | A-2 | | | | 1.0 | 2.5 | 5.0 | | |
| | Thermoplastic polyester resin | B | 90 | 90 | 90 | 90 | 90 | 90 | 100 | 90 |
| | ABS graft resin | D | 10 | 10 | 10 | 10 | 10 | 10 | | 10 |
| Properties | MVR | [cm³/10min.] | 26 | 21 | 16 | 22 | 19 | 18 | 47 | 28 |
| | Charpy impact strength | [KJ/m²] | 14.4 | 14.3 | 13.4 | 13.0 | 14,0 | 11.7 | 5.6 | 12.8 |
| | HDT | [°C] | 124 | 123 | 118 | 129 | 137 | 132 | 132 | 120 |

As clear from Tables 2 to 4, the thermoplastic resin compositions of Examples 1 to 16 prepared by adding the epoxy-modified vinyl copolymer (A) of the invention to the thermoplastic polyester resin (B) attained a significant enhancement in heat resistance, although the fluidity of these thermoplastic resin compositions was slightly low, as compared to Comparative Example 1 which did not involve the epoxy-modified vinyl copolymer (A).

Comparative Examples 2 to 4, in which the epoxy-modified vinyl copolymer (A) was replaced by the unmodified vinyl copolymer (A-3), failed to attain a sufficient enhancement in heat resistance and resulted in a lower heat resistance with increasing amount of the unmodified vinyl copolymer (A-3).

Examples 1 to 16 outperformed Comparative Example 1 also in terms of hydrolysis resistance and tensile strength.

From Table 5, the significant enhancement in heat resistance can be attained while obtaining increased impact strength similarly when the thermoplastic resin (C) is a combination of the thermoplastic polyester resin (B) and the ABS graft resin (D).

Although the present invention has been described in detail with respect to some specific embodiments, the skilled person will appreciate that various modifications are possible within the spirit and scope of the invention.

This application is based upon Japanese Patent Application No. 2016-171056 filed on September 1, 2016, the entire contents of which are incorporated herein by reference.

## Claims

1. An epoxy-modified vinyl copolymer (A) comprising 0.1 to 95 parts by mass of an epoxy group-containing vinyl monomer and 5 to 99.9 parts by mass of one or more vinyl monomers selected from aromatic vinyl monomers, vinyl cyanide monomers and additional vinyl monomers copolymerizable with these monomers (with the proviso that the total of the epoxy group-containing vinyl monomer and the one or more vinyl monomers selected from aromatic vinyl monomers, vinyl cyanide monomers and additional vinyl monomers copolymerizable with these monomers is 100 parts by mass), the copolymer having a weight average molecular weight Mw of 50,000 to 300,000 and an epoxy equivalent of 150 to 143,000 g/eq.

2. The epoxy-modified vinyl copolymer (A) according to Claim 1, wherein the one or more vinyl monomers selected from aromatic vinyl monomers, vinyl cyanide monomers and additional vinyl monomers copolymerizable with these monomers include at least an aromatic vinyl monomer and a vinyl cyanide monomer.

3. The epoxy-modified vinyl copolymer (A) according to Claim 2, wherein the vinyl monomers include 4.1 to 99 parts by mass of the aromatic vinyl monomer and 0.9 to 95.8 parts by mass of the vinyl cyanide monomer.

4. A thermoplastic resin composition comprising the epoxy-modified vinyl copolymer (A) described in any one of Claims 1 to 3, and a thermoplastic resin (C).

5. The thermoplastic resin composition according to Claim 4, wherein the thermoplastic resin (C) comprises a thermoplastic polyester resin (B).

6. The thermoplastic resin composition according to Claim 4 or 5, which includes 0.1 to 15 parts by mass of the epoxy-modified vinyl copolymer (A) per 100 parts by mass of the thermoplastic resin (C).

7. A shaped article comprising the thermoplastic resin composition described in any one of Claims 4 to 6.
